# EUROPÄISCHE PATENTSCHRIFT

(11) **EP 3 946 845 B1**
(45) Veröffentlichungstag und Bekanntmachung des Hinweises auf die Patenterteilung: **03.05.2023**
(21) Anmeldenummer: 20717776.7
(22) Anmeldetag: 19.03.2020
(51) Int. Cl.: B25J 15/02, B25J 13/08, B25J 9/16, B25J 15/12

(54) **EINLERNEN EINER HALTEKRAFT FÜR EINEN GEGENSTAND IN EINEM ROBOTISCHEN GREIFER**
TEACHING A HOLDING FORCE FOR AN OBJECT IN A ROBOTIC GRIPPER
APPRENTISSAGE D'UNE FORCE DE MAINTIEN D'UN OBJET DANS UNE PINCE ROBOTISÉE

(30) Priorität: 28.03.2019 DE 102019107975
(43) Veröffentlichungstag der Anmeldung: 09.02.2022
(73) Patentinhaber: Franka Emika GmbH, 80797 München (DE)
(72) Erfinder: SPENNINGER, Andreas, 85757 Karlsfeld (DE); ROKAHR, Tim, 81245 München (DE); SHINGAREY, Dmitriy, 80689 München (DE)
(74) Vertreter: Rösler Rasch van der Heide & Partner
(86) Internationale Anmeldenummer: PCT/EP2020/057578
(87) Internationale Veröffentlichungsnummer: WO 2020/193352

(56) Entgegenhaltungen:
- WO-A1-2017/036520
- DE-A1-102007 062 108
- DE-B3-102017 124 356
- US-A1- 2016 059 407

## Beschreibung

Die Erfindung betrifft ein Verfahren zum Einlernen einer Haltekraft zum Halten eines Gegenstands durch einen Greifer eines Robotermanipulators sowie ein Robotersystem mit einem Robotermanipulator und mit einer Recheneinheit und mit einem am Robotermanipulator angeordneten Greifer, wobei das Robotersystem zum Einlernen einer Haltekraft zum Halten eines Gegenstands durch den Greifer des Robotermanipulators dient.

Aus dem Stand der Technik sind verschiedenste Verfahren zum Programmieren eines Industrieroboters bekannt.

Die WO 2017/036520 A1 betrifft hierzu ein Roboterlehrsystem, umfassend eine Recheneinrichtung, insbesondere eine Robotersteuerung, eine handgehaltene Lehrvorrichtung, umfassend einen handgehaltenen Grundkörper, ein mechanisches Wechselwirkungswerkzeug, das an dem handgehaltenen Grundkörper montiert ist, mindestens einen Kraftsensor zum Messen einer insbesondere durch das mechanische Wechselwirkungswerkzeug aufgebrachten Kraft, eine Kommunikationsschnittstelle zum Datenaustausch mit der Recheneinrichtung, insbesondere mit der Robotersteuerung, wobei die handgehaltene Lehrvorrichtung vorgesehen ist, Daten an ihre Kommunikationsschnittstelle bereitzustellen, die die von dem mindestens einen Kraftsensor gemessene Kraft beschreiben, und wobei die Rechenvorrichtung, insbesondere die Robotersteuerung, vorgesehen ist, diese Daten zu empfangen und zu speichern.

Die DE 10 2017 124 356 B3 betrifft ferner ein Robotersystem aufweisend einen mehrachsigen Manipulator zur Applikation einer Prozesskraft auf ein Objekt in Bezug auf eine Tätigkeit, mittels der der Manipulator mit dem Objekt interagiert, wobei der Manipulator ausgestaltet ist, bei Kontakt mit dem Objekt eine Eingabekraft zu erfassen, die unmittelbar auf den Manipulator durch einen Kontakt eines Benutzers ausgeübt wird, die Eingabekraft in Abhängigkeit eines definierten Umwandlungsfaktors auf einen in Bezug auf die Tätigkeit gewünschten Wert der Prozesskraft zu verstärken, eine Gegenkraft zu erfassen, die sich bei Kontakt des Manipulators mit dem Objekt einstellt, und diese Gegenkraft an den Benutzer in Abhängigkeit eines definierten Umwandlungsfaktors zu übertragen.

Die US 2016/059407 A1 betrifft außerdem ein Roboter-Lehrgerät zum Einlernen einer Bedienung eines Roboters, wobei das Roboter-Lehrgerät umfasst: Eine Messeinheit, die so konfiguriert ist, dass sie den Zustand einer Wirkung eines Mechanismus auf ein Zielobjekt misst, während der Mechanismus auf das Zielobjekt wirkt, wobei der Mechanismus eine Form oder eine Funktion hat, die einer Handeinheit des Roboters entspricht; eine Erzeugungseinheit, die so konfiguriert ist, dass sie eine Betriebsanweisung für den Roboter basierend auf dem von der Messeinheit gemessenen Zustand generiert; und eine Aufzeichnungseinheit, die für die Aufzeichnung der Bedienungsanleitung konfiguriert ist.

Die DE 10 2007 062 108 A1 betrifft schließlich ein Verfahren zum Programmieren eines Industrieroboters, aufweisend folgende Verfahrensschritte: Manuelles Führen eines Industrieroboters an eine virtuelle Fläche im Raum, bei deren Erreichen der Industrieroboter derart angesteuert wird, dass er sich nicht weiter manuell führen lässt, Ermitteln derjenigen Kraft und/oder desjenigen Drehmoments, die bzw. das auf den Industrieroboter wirkt, wenn trotz Erreichens der virtuellen Fläche versucht wird, den Industrieroboter weiter manuell zu führen, und Speichern der Kraft und/oder des Drehmoments.

Aufgabe der Erfindung ist es, eine Haltekraft zum Halten eines Gegenstands durch einen Greifer eines Robotermanipulators zu ermitteln.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Verfahren zum Einlernen einer Haltekraft zum Halten eines Gegenstands durch einen Greifer eines Robotermanipulators, wobei der Greifer reversibel elastisch verformbare Greiferbacken aufweist, aufweisend die Schritte:
- Schließen des Greifers bis die Greiferbacken den Gegenstand an Kontaktstellen der Greiferbacken kontaktieren,
- Externes Aufbringen einer gewünschten Schließkraft an Anschlussstellen der Greiferbacken zu Greiferbackenlagern, sodass sich die Anschlussstellen relativ zu den Kontaktstellen unter elastischer Verformung der Greiferbacken verschieben,
- Ansteuern eines Greiferantriebs zum Halten der aktuellen Position der Anschlussstellen und Beenden der externen aufgebrachten Schließkraft auf die Anschlussstellen,
- Ermitteln und Abspeichern des Betrags einer Greifkraft oder eines Greifmoments, wobei die Greifkraft oder das Greifmoment von der elastischen Verformung der Greiferbacken verursacht wird und von den Greiferbacken auf die Anschlussstellen wirkt.

Der Begriff "reversibel elastisch verformbar" bedeutet, dass die Greiferbacken wie eine perfekte Feder niemals Energie beim Verformen dissipieren, sondern diese voll reversibel wieder abgeben können. Beim Verformen wirkt daher eine Federkraft entgegen, und wirkt auch so lange beim zurück Verformen in die ursprüngliche Form der Greiferbacken, bis die ursprüngliche Form wieder hergestellt ist. Die Greiferbacken weisen bevorzugt über ihre ganze Länge ein reversibel elastisch verformbares Material und/oder eine entsprechende Struktur auf, oder können mit guter Näherung alternativ bevorzugt dazu abschnittsweise als Starrkörper gesehen werden und nur bestimmte Abschnitte, insbesondere Abschnitte an ihren Anschlussstellen sind reversibel elastisch verformbar. Diese elastischen Abschnitte können insbesondere durch reversibel verformbares Material, beispielsweise eine Feder ausgebildet sein. Der Effekt auf die Kontaktstellen gegenüber den Anschlussstellen bleibt jeweils der gleiche.

Bevorzugt weist der Greifer genau zwei Greiferbacken auf, die dazu ausgeführt sind, aufeinander zu zu verfahren um den Greifer zu schließen und analog dazu sich voneinander weg zu bewegen um den Greifer zu öffnen. Das Ansteuern eines Greiferantriebs zum Halten der aktuellen Position der Anschlussstellen erfolgt bevorzugt auf eine Eingabe eines Anwenders hin. Der Anwender gibt bevorzugt zuerst die Eingabe ein, worauf hin automatisch die Position der Greiferbacken, insbesondere die Position der Anschlussstellen der Greiferbacken, durch eine entsprechende Ansteuerung des Greiferantriebs an der aktuellen Position während der Eingabe verbleiben, wodurch die Schließkraft des Anwenders gelöst werden kann, ohne dass sich die Anschlussstellen der Greiferbacken verschieben. Mit dieser Haltekraft bzw. mit diesem Haltemoment halten die Greiferbackenlager gegen die Federkraft, die von den reversibel elastisch verbiegbaren Greiferbacken auf die Greiferbackenlager ausgeübt wird.

In dem Augenblick, in dem das Aufbringen der externen gewünschten Schließkraft auf die Anschlussstellen der Greiferbacken beendet wird, wird daher die extern aufgebrachte gewünschte Schließkraft durch die Haltekraft des Greiferantriebs zum Halten der Greiferbackenlager zusammen mit den Anschlussstellen gegen die Federkraft der Greiferbacken ersetzt. Weder die Anschlussstellen noch andere Komponenten des Gesamtsystems bewegen sich dabei. Da nun nicht mehr die ursprünglich extern aufgebrachte Schließkraft im Kraftfluss zwischen den Anschlussstellen über die Greiferbacken auf den Gegenstand übertragen wird, sondern von den Kontaktstellen der Greiferbacken entlang der Greiferbacken über die Anschlussstellen der Greiferbacken bis hin zu den Greiferbackenlagern und letztendlich damit auch zum Greifantrieb, kann in diesem erweiterten Kraftfluss an prinzipiell beliebiger Stelle die Kraft oder das Moment, das von den Greiferbacken über die Anschlussstellen auf die Greiferbackenlager bis hin zum Greiferantrieb übertragen wird, gemessen werden. Zur Messung dieses Greifmoments oder dieser Greifkraft bieten sich daher insbesondere Kraftsensoren und Momentensensoren an.

Der Gegenstand wird dabei insbesondere als Starrkörper betrachtet, er darf jedoch ebenfalls sowohl ein vollkommen reversibel elastisches Verhalten als auch ein plastisches Verhalten zeigen, da dies dem Ermitteln der Greifkraft und oder des Greifmoments nicht entgegensteht. Die Kontaktstellen der Greiferbacken mit dem Gegenstand liegen insbesondere an einem freien Ende der Greiferbacken, wogegen insbesondere die den freien Enden gegenüberliegenden Enden der Greiferbacken die Anschlussstellen der Greiferbacken mit den jeweiligen Greiferbackenlagern bildet. Die Greiferbacken sind bevorzugt länglich ausgebildet, wobei beim Aufbringen einer gewünschten externen Schließkraft auf die Anschlussstellen die Greiferbacken um eine jeweilige Querachse, welche senkrecht zur jeweiligen Längsachse der Greiferbacken ist, gebogen. Die Greiferbacken nehmen daher ein Biegemoment auf, welches als gespeicherte Federkraft beim Loslassen jedoch wieder zur Verfügung steht und zur Zurückverformung der Greiferbacken in die ursprüngliche Form der Greiferbacken genutzt werden kann. Ohne Reibungsverluste entspricht daher die Schließkraft letztendlich auch exakt der Greifkraft, bzw. die Schließkraft wird verlustlos abhängig vom betrachteten Hebelarm in das Greifmoment überführt.

Es ist eine vorteilhafte Wirkung der Erfindung, dass ein Anwender mit seiner manuellen Kraft, insbesondere mit Handkraft, eine gewünschte Greifkraft des Geifers auf einen Gegenstand zum Halten des Gegenstands einem Robotersystem in einem Einlernvorgang (engl. "Teaching" oder auch "Teach-In") mitteilen kann, ohne dabei einen numerischen Wert an einer Vorrichtung eingeben zu müssen. Die reversibel elastischen Greiferbacken erlauben eine direkte taktile Rückmeldung auf die Handkraft des einlernenden Anwenders, sodass der Anwender durch Fühlen der aufgebrachten Schließkraft die Kraft einstellen und einem Robotersystem zum Abspeichern mitteilen kann. Dies ist von besonders großem Vorteil, wenn der Gegenstand, der zwischen den Greiferbacken durch Haftreibungskraft verbleiben soll, ein leicht zu beschädigender Gegenstand ist. Ist der Gegenstand beispielsweise eine Frucht, wie eine Weintraube, so darf der Gegenstand nicht mit übermäßig großer Kraft gequetscht werden, da er sonst beschädigt wird. Das intuitive Greifen eines solches Gegenstands durch den Menschen, kann daher durch das erfindungsgemäße Verfahren direkt auf den Robotermanipulator und insbesondere seinen Greifer übertragen werden. Dass Einlernen einer Greifkraft für den Robotermanipulator geschieht weiterhin vorteilhaft in nur sehr kurzer Zeit.

Die Ausnutzung von Elastizität in den Greiferbacken bietet gegenüber der Ausnutzung von Elastizität im Riemen oder auch in anderen Teilen des Antriebsstranges, wie des Getriebes, deutliche Vorteile. Wird insbesondere ein elastischer Riemen verwendet anstatt oder zusätzlich von elastischen Greiferbacken, so wäre das Verfahren gemäß dem ersten Aspekt der Erfindung prinzipiell uneingeschränkt ausführbar, da sich auch in diesem Fall beim manuellen Aufbringen einer Schließkraft die Anschlussstellen gegenüber den Kontaktstellen der Greiferbacken am Gegenstand und gegen eine Federkraft verschieben. Tatsächlich würde aber die Genauigkeit des Verfahrens nachteilhaft leiden und unter Umständen zu unerwünschter Materialermüdung führen.

Gemäß einer vorteilhaften Ausführungsform sind die Greiferbackenlager Abschnitte auf einem geschlossenen Riemen und die Anschlussstellen der Greiferbacken sind riemenseitige Enden der Greiferbacken, wobei die Kontaktstellen der Greiferbacken mit dem Gegenstand im Bereich der freien Enden der Greiferbacken liegen, wobei sich die freien Enden der Greiferbacken und die Anschlussstellen der Greiferbacken jeweils entlang einer jeweiligen Längsachse einer der Greiferbacken gegenüber liegen. Der Riemen ist insbesondere ein Zahnriemen oder ein Keilriemen, wobei der Ausdruck des geschlossenen Riemens meint, dass Anfang und Ende des Riemens nahtlos miteinander verbunden sind, sodass der Riemen umlaufend über eine oder mehrere Riemenscheiben laufen oder auch angetrieben werden kann.

Gemäß einer weiteren vorteilhaften Ausführungsform wird die Greifkraft in einem Kraftsensor ermittelt, wobei der Kraftsensor eine am Riemen anliegende Kraft ermittelt. Dies erfolgt vorteilhaft mittels Kraftmessung an einer Riemenscheibe oder auch mit optischen Mitteln, beispielsweise über Interferenzmessungen. Vorteilhaft wird daher die von den Greiferbacken auf die Greiferbackenlager übertragene Greifkraft bzw. das übertragene Greifmoment direkt im Kraftfluss auf den Greiferantrieb gemessen, was zu einer zuverlässigen und genauen Messung führt.

Gemäß einer weiteren vorteilhaften Ausführungsform wird die Greifkraft in einem Drehmomentsensor ermittelt, wobei der Drehmomentsensor an einer Riemenscheibe angeordnet ist. Eine Riemenscheibe dient insbesondere zum Spannen des Riemens, zum Umlenken des Riemens, oder auch zum Antreiben des Riemens.

Gemäß einer weiteren vorteilhaften Ausführungsform wird die Greifkraft in einem Drehmomentsensor ermittelt, wobei der Drehmomentsensor am Greiferantrieb angeordnet ist. Vorteilhaft kann beim Vorhandensein eines Drehmomentsensors am Greiferantrieb eine technische Standardlösung genutzt werden, ohne zusätzlich einen Kraftsensor zu benötigen. Der Drehmomentsensor am Greiferantrieb basiert dabei insbesondere auf gängigen Drehmomentsensoren, wie sie von Antrieben von Gelenken von Robotermanipulatoren bereits bekannt sind.

Gemäß einer weiteren vorteilhaften Ausführungsform erfolgt das Schließen der Greiferbacken des Greifers bis die Greiferbacken den Gegenstand an Kontaktstellen der Greiferbacken kontaktieren durch Ansteuern des Greiferantriebs. Das Ansteuern des Greiferantriebs zum Schließen der Greiferbacken bis zum Kontaktieren des Gegenstands mit den Greiferbacken an den Kontaktstellen der Greiferbacken erfolgt insbesondere durch eine Kraftrückmeldung der Greiferkraft, wobei insbesondere vorteilhaft das Schließen der Greiferbacken unmittelbar dann gestoppt wird, nachdem eine Kontaktkraft der Greiferbacken mit dem Gegenstand festgestellt wurde, um mit einer möglichst niedrigen Ausgangskraft den Einlernvorgang zu beginnen.

Gemäß einer weiteren vorteilhaften Ausführungsform erfolgt das Schließen der Greiferbacken des Greifers bis die Greiferbacken den Gegenstand an Kontaktstellen der Greiferbacken kontaktieren durch manuelles Führen der Greiferbacken. Vorteilhaft kann durch diese Ausführungsform ein besonders intuitives und schnelles Verfahren ermöglicht werden, die gewünschte Greiferkraft auf den Gegenstand für das Robotersystem einzulernen. Denn in dem Fall dieser Ausführungsform braucht die Hand des Anwenders insbesondere nur einen einzigen Vorgang zum Schließen der Greiferbacken gegen den Gegenstand und zum anschließenden externen Aufbringen der gewünschten Schließkraft durchführen.

Gemäß einer weiteren vorteilhaften Ausführungsform ist die extern aufgebrachte gewünschte Schließkraft eine manuell aufgebrachte Kraft.

Gemäß einer weiteren vorteilhaften Ausführungsform ist die extern aufgebrachte gewünschte Schließkraft eine von einem zweiten Greifer eines zweiten Robotermanipulators aufgebrachte Kraft.

Ein weiterer Aspekt der Erfindung betrifft ein Robotersystem mit einem Robotermanipulator und mit einer Recheneinheit und mit einem am Robotermanipulator angeordneten Greifer, wobei das Robotersystem zum Einlernen einer Haltekraft zum Halten eines Gegenstands durch den Greifer des Robotermanipulators dient, wobei der Greifer reversibel elastisch verformbare Greiferbacken aufweist, wobei die Recheneinheit dazu ausgeführt ist, nach einem externen Aufbringen einer gewünschten Schließkraft an Anschlussstellen der Greiferbacken zu Greiferbackenlagern, sodass sich die Anschlussstellen relativ zu den Kontaktstellen unter elastischer Verformung der Greiferbacken verschieben, einen Greiferantrieb zum Halten der aktuellen Position der Anschlussstellen anzusteuern, sodass nach dem Beenden der externen aufgebrachten Kraft auf die Anschlussstellen die Anschlussstellen ihre Position beibehalten, und wobei die Recheneinheit dazu ausgeführt ist, den Betrag einer Greifkraft oder eines Greifmoments zu ermitteln und abzuspeichern, wobei die Greifkraft oder das Greifmoment von der elastischen Verformung der Greiferbacken verursacht wird und von den Greiferbacken auf die Anschlussstellen wirkt.

Vorteile und bevorzugte Weiterbildungen des vorgeschlagenen Robotersystems ergeben sich durch eine analoge und sinngemäße Übertragung der im Zusammenhang mit dem vorgeschlagenen Verfahrens vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: ein Verfahren zum Einlernen einer Haltekraft zum Halten eines Gegenstands durch einen Greifer eines Robotermanipulators gemäß einem Ausführungsbeispiel der Erfindung,
- Fig. 2: einen Greifer gemäß einem weiteren Ausführungsbeispiel der Erfindung, und
- Fig. 3: ein Robotersystem mit einem Robotermanipulator und mit einer Recheneinheit und mit einem am Robotermanipulator angeordneten Greifer gemäß einem weiteren Ausführungsbeispiel der Erfindung.

Die Darstellungen in den Figuren sind schematisch und nicht maßstäblich.

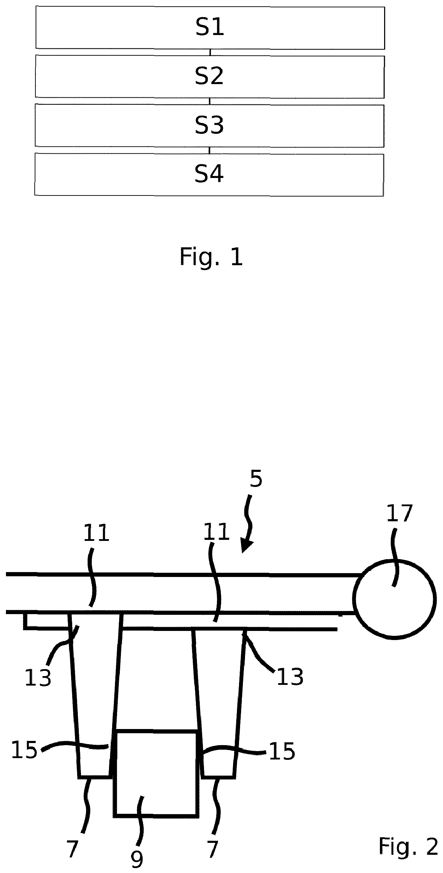

Fig. 1 zeigt ein Verfahren zum Einlernen einer Haltekraft zum Halten eines Gegenstands 9 durch einen Greifer 5 eines Robotermanipulators 3, wobei der Greifer 5 reversibel elastisch verformbare Greiferbacken 7 aufweist, aufweisend die Schritte:
- Schließen S1 des Greifers 5 bis die Greiferbacken 7 den Gegenstand 9 an Kontaktstellen 15 der Greiferbacken 7 kontaktieren, wobei das Schließen der Greiferbacken 7 des Greifers 5 bis die Greiferbacken 7 den Gegenstand 9 an Kontaktstellen 15 der Greiferbacken 7 kontaktieren durch Ansteuern des Greiferantriebs 17 erfolgt,
- Externes Aufbringen S2 einer gewünschten Schließkraft an Anschlussstellen 13 der Greiferbacken 7 zu Greiferbackenlagern 11, sodass sich die Anschlussstellen 13 relativ zu den Kontaktstellen 15 unter elastischer Verformung der Greiferbacken 7 verschieben,
- Ansteuern S3 eines Greiferantriebs 17 zum Halten der aktuellen Position der Anschlussstellen 13 und Beenden der externen aufgebrachten Schließkraft auf die Anschlussstellen 13, und
- Ermitteln und Abspeichern S4 des Betrags einer Greifkraft oder eines Greifmoments, wobei die Greifkraft oder das Greifmoment von der elastischen Verformung der Greiferbacken 7 verursacht wird und von den Greiferbacken 7 auf die Anschlussstellen 13 wirkt.

Fig. 2 zeigt einen Greifer 5. Der Greifer 5 weist längliche Greiferbacken 7 aus Kunststoff auf. Die Greiferbacken 7 haben jeweils ein freies Ende und gegenüberliegend dazu eine Anschlussstelle 13, welche jeweils mit dem gleichen Riemen, wenn auch auf gegenüberliegenden Seiten des Riemens verbunden ist. Der Riemen bildet die Riemenlager 11 aus, wobei der Abschnitt des Riemens, der sich an der jeweiligen Anschlussstelle 13 befindet, als jeweiliges Riemenlager 11 bezeichnet wird. Die Greiferbackenlager 11 sind daher bestimmte Abschnitte auf dem geschlossenen Riemen und die Anschlussstellen 13 der Greiferbacken 7 sind riemenseitige Enden der Greiferbacken 7. Die Kontaktstellen 15 der Greiferbacken 7 mit dem Gegenstand 9 liegen dabei im Bereich der freien Enden der Greiferbacken 7. Der Riemen wird von einem Greiferantrieb 17 angetrieben, an dem auch ein Drehmomentsensor angeordnet ist.

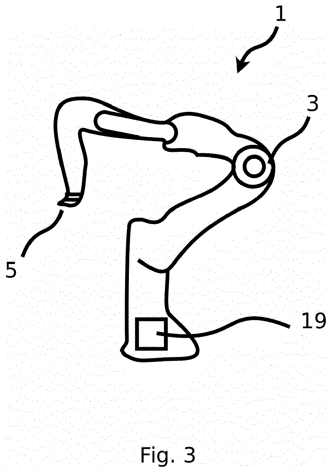

Fig. 3 zeigt ein Robotersystem 1 mit einem Robotermanipulator 3 und mit einer Recheneinheit 19 und mit einem am Robotermanipulator 3 angeordneten Greifer 5, wie er in Fig. 2 dargestellt ist. Das Robotersystem 1 dient zum Einlernen einer Haltekraft zum Halten eines Gegenstands 9 durch den Greifer 5 des Robotermanipulators 3. Der Greifer 5 weist voll reversibel elastisch verformbare Greiferbacken 7 aus Kunststoff auf. Die Recheneinheit 19 des Robotermanipulators 3 ist dazu ausgeführt ist, nach einem externen Aufbringen einer gewünschten Schließkraft an Anschlussstellen 13 der Greiferbacken 7 zu Greiferbackenlagern 11, sodass sich die Anschlussstellen 13 relativ zu den Kontaktstellen 15 unter elastischer Verformung der Greiferbacken 7 verschieben, einen Greiferantrieb 17 zum Halten der aktuellen Position der Anschlussstellen 13 anzusteuern, sodass nach dem Beenden der externen aufgebrachten Kraft auf die Anschlussstellen 13 die Anschlussstellen 13 ihre Position beibehalten. Ferner ist die Recheneinheit 19 dazu ausgeführt, den Betrag einer Greifkraft oder eines Greifmoments zu ermitteln und abzuspeichern, wobei die Greifkraft oder das Greifmoment von der elastischen Verformung der Greiferbacken 7 verursacht wird und von den Greiferbacken 7 auf die Anschlussstellen 13 wirkt.

### Bezugszeichenliste

- 1: Robotersystem
- 3: Robotermanipulator
- 5: Greifer
- 7: Greiferbacken
- 9: Gegenstand
- 11: Greiferbackenlager
- 13: Anschlussstellen
- 15: Kontaktstellen
- 17: Greiferantrieb
- 19: Recheneinheit

- S1: Schließen
- S2: Externes Aufbringen
- S3: Ansteuern
- S4: Ermitteln und Abspeichern

## Patentansprüche

1. Verfahren zum Einlernen einer Haltekraft zum Halten eines Gegenstands (9) durch einen Greifer (5) eines Robotermanipulators (3), wobei der Greifer (5) reversibel elastisch verformbare Greiferbacken (7) aufweist, aufweisend die Schritte:
- Schließen (S1) des Greifers (5) bis die Greiferbacken (7) den Gegenstand (9) an Kontaktstellen (15) der Greiferbacken (7) kontaktieren,
- Externes Aufbringen (S2) einer gewünschten Schließkraft an Anschlussstellen (13) der Greiferbacken (7) zu Greiferbackenlagern (11), sodass sich die Anschlussstellen (13) relativ zu den Kontaktstellen (15) unter elastischer Verformung der Greiferbacken (7) verschieben,
- Ansteuern (S3) eines Greiferantriebs (17) zum Halten der aktuellen Position der Anschlussstellen (13) und Beenden der extern aufgebrachten Schließkraft auf die Anschlussstellen (13),
- Ermitteln und Abspeichern (S4) des Betrags einer Greifkraft oder eines Greifmoments, wobei die Greifkraft oder das Greifmoment von der elastischen Verformung der Greiferbacken (7) verursacht wird und von den Greiferbacken (7) auf die Anschlussstellen (13) wirkt.

2. Verfahren nach Anspruch 1,
wobei die Greiferbackenlager (11) Abschnitte auf einem geschlossenen Riemen sind und die Anschlussstellen (13) der Greiferbacken (7) riemenseitige Enden der Greiferbacken (7) sind, und wobei die Kontaktstellen (15) der Greiferbacken (7) mit dem Gegenstand (9) im Bereich der freien Enden der Greiferbacken (7) liegen.

3. Verfahren nach Anspruch 2,
wobei die Greifkraft in einem Kraftsensor ermittelt wird, wobei der Kraftsensor eine am Riemen anliegende Kraft ermittelt.

4. Verfahren nach Anspruch 2,
wobei die Greifkraft in einem Drehmomentsensor ermittelt wird, wobei der Drehmomentsensor an einer Riemenscheibe angeordnet ist.

5. Verfahren nach einem der vorhergehenden Ansprüche,
wobei die Greifkraft in einem Drehmomentsensor ermittelt wird, wobei der Drehmomentsensor am Greiferantrieb (17) angeordnet ist.

6. Verfahren nach einem der Ansprüche 1 bis 5,
wobei das Schließen der Greiferbacken (7) des Greifers (5) bis die Greiferbacken (7) den Gegenstand (9) an Kontaktstellen (15) der Greiferbacken (7) kontaktieren durch Ansteuern des Greiferantriebs (17) erfolgt.

7. Verfahren nach einem der Ansprüche 1 bis 5,
wobei das Schließen der Greiferbacken (7) des Greifers (5) bis die Greiferbacken (7) den Gegenstand (9) an Kontaktstellen (15) der Greiferbacken (7) kontaktieren durch manuelles Führen der Greiferbacken (7) erfolgt.

8. Verfahren nach einem der Ansprüche 1 bis 7,
wobei die extern aufgebrachte gewünschte Schließkraft eine manuell aufgebrachte Kraft ist.

9. Verfahren nach einem der Ansprüche 1 bis 7,
wobei die extern aufgebrachte gewünschte Schließkraft eine von einem zweiten Greifer eines zweiten Robotermanipulators aufgebrachte Kraft ist.

10. Robotersystem (1) mit einem Robotermanipulator (3) und mit einer Recheneinheit (19) und mit einem am Robotermanipulator (3) angeordneten Greifer (5), wobei das Robotersystem (1) zum Einlernen einer Haltekraft zum Halten eines Gegenstands (9) durch den Greifer (5) des Robotermanipulators (3) dient, wobei der Greifer (5) reversibel elastisch verformbare Greiferbacken (7) aufweist, wobei die Recheneinheit (19) dazu ausgeführt ist, nach einem externen Aufbringen einer gewünschten Schließkraft an Anschlussstellen (13) der Greiferbacken (7) zu Greiferbackenlagern (11), sodass sich die Anschlussstellen (13) relativ zu den Kontaktstellen (15) unter elastischer Verformung der Greiferbacken (7) verschieben, einen Greiferantrieb (17) zum Halten der aktuellen Position der Anschlussstellen (13) anzusteuern, sodass nach dem Beenden der externen aufgebrachten Kraft auf die Anschlussstellen (13) die Anschlussstellen (13) ihre Position beibehalten, und wobei die Recheneinheit (19) dazu ausgeführt ist, den Betrag einer Greifkraft oder eines Greifmoments zu ermitteln und abzuspeichern, wobei die Greifkraft oder das Greifmoment von der elastischen Verformung der Greiferbacken (7) verursacht wird und von den Greiferbacken (7) auf die Anschlussstellen (13) wirkt.

## Claims

1. Method for teaching in a holding force to hold an object (9) by means of a gripper (5) of a robot manipulator (3), wherein the gripper (5) comprises reversibly elastically deformable gripper jaws (7), thereby comprising the steps:
- closing (S1) the gripper (5) until the gripper jaws (7) contact the object (9) at contact points (15) of the gripper jaws (7),
- external application (S2) of a desired clamping force at connection points (13) the gripper jaws (7) to gripper jaw bearings (11) so that the connection points (13) shift relative to the contact points (15) under elastic deformation of the gripper jaws (7),
- controlling (S3) of a gripper drive (17) to hold the current position of the connection points (13) and terminate the externally applied clamping force to the connection points (13),
- determining and saving (S4) the amount value of a gripping force or a gripping torque, wherein the gripping force or the gripping moment is caused by the elastic deformation of the gripper jaws (7) and acts on the connection points (13) from the gripper jaws (7).

2. The method according to Claim 1,
wherein the gripper jaw bearings (11) are sections on a closed belt, and the connection points (13) of the gripper jaws (7) are belt-side ends of the gripper jaws (7), and wherein the contact parts (15) of the gripper jaws (7) with the object (9) are in the region of the free ends of the gripper jaws (7).

3. Method according to Claim 2,
wherein the gripping force is determined in a force sensor, wherein the force sensor determines a force applied to the belt.

4. Method according to Claim 2,
wherein the gripping force is determined in a torque sensor, wherein the torque sensor is arranged on a pulley.

5. Method according to any one of the preceding claims,
wherein the gripping force is determined in a torque sensor, wherein the torque sensor is arranged on the gripper drive (17).

6. The method according to any one of the Claims 1 to 5,
wherein the closing of the gripper jaws (7) of the gripper (5) is carried out until the gripper jaws (7) contact the object (9) at contact points (15) of the gripper jaws (7) by controlling the gripper drive (17).

7. Method according to any one of the Claims 1 to 5,
wherein the closing of the gripper jaws (7) of the gripper jaw (5) is carried out until the gripper jaws (7) contact the object (9) on contact parts (15) of the gripper jaws (7) by manually guiding the gripper jaws (7) .

8. Method according to any one of the Claims 1 to 7,
wherein the externally applied desired clamping force is a manually applied force.

9. Method according to any one of the Claims 1 to 7,
wherein the externally applied desired clamping force is a force applied by a second gripper of a second robot manipulator.

10. Robot system (1) with a robot manipulator (3) and with a computing unit (19) and with a gripper (5) arranged on the robot manipulator (3), wherein the robot system (1) is used to teach in a holding force to hold an object (9) by means of the gripper (5) of the robot manipulator (3), wherein the gripper (5) comprises reversibly elastically deformable gripper jaws (7), wherein, after an external application of a desired clamping force at connection points (13) of the gripper jaws (7) to gripper jaw bearings (11), the computing unit (19) is designed to control a gripper drive (17) to hold the current position of the connection points (13) so that the connection points (13) shift relative to the contact points (15) under elastic deformation of the gripper jaws (7) in such a way that, after stopping the external applied force on the connection points (13), the connection points (13) maintain their position, and wherein the computing unit (19) is designed to determine and save the amount value of a gripping force or a gripping torque, wherein the gripping force or the gripping torque is caused by the elastic deformation of the gripper jaws (7) and acts on the connection points (13) from the gripper jaws (7).

## Revendications

1. Procédé d'apprentissage d'une force de maintien pour le maintien d'un objet (9) par une pince (5) d'un manipulateur de robot (3), sachant que le pince (5) comporte des mâchoires de pince (7) déformables élastiquement de façon réversible, comportant les étapes de :
- fermeture (S1) de la pince (5) jusqu'à ce que les mâchoires de pince (7) entrent en contact avec l'objet (9) aux points de contact (15) des mâchoires de pince (7),
- application externe (S2) d'une force de fermeture souhaitée aux points de raccordement (13) des mâchoires de pince (7) aux points d'appui de mâchoires de pince (11) de telle manière que les points de raccordement (13) se déplacent par rapport aux points de contact (15) par déformation élastique des mâchoires de pince (7),
- commande (S3) d'un système d'entraînement de pince (17) pour maintenir la position actuelle des points de raccordement (13) et terminaison de la force de fermeture appliquée en externe aux points de raccordement (13),
- détermination et mémorisation (S4) du montant d'un force de préhension ou d'un couple de préhension, sachant que la force de préhension ou le couple de préhension est causé par la déformation élastique des mâchoires de pince (7) et agit sur les points de raccordement (13) par les mâchoires de pince (7) .

2. Procédé selon la revendication 1,
sachant que les points d'appui de mâchoires de pince (11) sont des sections sur une courroie fermée et les points de raccordement (13) des mâchoires de pince (7) sont les extrémités côté courroie des mâchoires de pince (7), et sachant que les points de contact (15) des mâchoires de pince (7) avec l'objet (9) se situent dans la zone des extrémités libres des mâchoires de pince (7) .

3. Procédé selon la revendication 2,
sachant que la force de préhension est déterminée dans un capteur de force, sachant que le capteur de force détermine une force appliquée à la courroie.

4. Procédé selon la revendication 2,
sachant que la force de préhension est déterminée dans un capteur de couple, sachant que le capteur de couple est disposé sur une poulie à courroie.

5. Procédé selon l'une quelconque des revendications précédentes,
sachant que la force de préhension est déterminée dans un capteur de couple, sachant que le capteur de couple est disposé sur le système d'entraînement de la pince (17) .

6. Procédé selon l'une quelconque des revendications 1 à 5,
sachant que la fermeture des mâchoires de pince (7) de la pince (5) a lieu, par commande du système d'entraînement de la pince (17), jusqu'à ce que les mâchoires de pince (7) entrent en contact avec l'objet (9) aux points de contact (15) des mâchoires de pince (7) .

7. Procédé selon l'une quelconque des revendications 1 à 5,
sachant que la fermeture des mâchoires de pince (7) de la pince (5) a lieu, par guidage manuel des mâchoires de pince (7), jusqu'à ce que les mâchoires de pince (7) entrent en contact avec l'objet (9) aux points de contact (15) des mâchoires de pince (7).

8. Procédé selon l'une quelconque des revendications 1 à 7,
sachant que la force de fermeture souhaitée appliquée en externe est une force appliquée manuellement.

9. Procédé selon l'une quelconque des revendications 1 à 7,
sachant que la force de fermeture souhaitée appliquée en externe est une force appliquée par une deuxième pince d'un deuxième manipulateur de robot.

10. Système de robot (1) avec un manipulateur de robot (3) et avec une unité d'ordinateur (19) et avec une pince (5) disposée sur le manipulateur de robot (3), sachant que le système de robot (1) sert à l'apprentissage d'une force de maintien pour maintenir un objet (9) par la pince (5) du manipulateur de robot (3), sachant que la pince (5) comporte des mâchoires de pince (7) élastiquement déformables de façon réversible, sachant que l'unité d'ordinateur (19) est réalisée pour commander un système d'entraînement de pince (17) pour maintenir aux positions des mâchoires de pince (7) la position actuelle des points de raccordement (13) après l'application externe d'une force de fermeture souhaitée aux points de raccordement (13) des mâchoires de pince (7) par rapport aux points d'appui de mâchoires de pince (11), de telle manière que les points de raccordement (13) se déplacent par rapport aux points de contact (15) par déformation élastique des mâchoires de pince (7), de telle sorte qu'après la terminaison de la force externe appliquée aux points de raccordement (13), les points de raccordement (13) conservent leur position et sachant que l'unité d'ordinateur (19) est réalisée pour déterminer et mémoriser le montant d'une force de préhension ou d'un couple de préhension, sachant que la force de préhension ou le couple de préhension est causé par la déformation élastique des mâchoires de pince (7) et agit par les mâchoires de pince (7) sur les points de raccordement (13).
